# EUROPEAN PATENT APPLICATION

(11) **EP 1 752 282 A1**
(43) Date of publication of application: **14.02.2007**
(21) Application number: 05425590.6
(22) Date of filing: 10.08.2005
(51) Int. Cl.: B30B 15/02, B29C 33/32, B21J 13/03

(54) **Mold with a device for the anchoring on the platens of a press**

(71) Applicant: Sapp S.p.A., 25038 Rovato BS (IT)
(72) Inventor: Mancini, Diego, 25050 Passirano Franciacorta BS (IT); Apollonio, Claudio, 25030 Pompiano BS (IT)
(74) Representative: Concone, Emanuele

(57) **Abstract**

A mold for the injection molding of plastic materials or rubber, pressure die casting of metals or die forging of sheets is made up of a first half (H1) and a second half (H2) to be secured on respective platens (MP, FP) of a press, and it includes a magnetic anchoring device including a first magnetic field generator (MG1), arranged on the base of the first mold half (H1), and a second magnetic field generator (MG2), arranged on the base of the second mold half (H2), so as to act on said press platens (MP, FP). Such a mold is a "universal" mold, meaning that it can be made in any material, even non-magnetic, and it can be used in any type of manufacturing process on any press.

## Description

The present invention relates to molds used in various manufacturing processes (injection molding of plastic materials or rubber, pressure die casting of metals, die forging of sheets), and in particular to a mold provided with a device for the magnetic anchoring on the platens of a press.

It is known that a mold is usually made up of two halves that are secured on the platens of a press, a moving platen and a fixed platen, which press provides the closure pressure required to carry out the molding operation and performs the opening of the mold to eject the molded article.

Various systems for anchoring the mold on the press are presently in use, and they can be divided into three categories:
a) a mechanical system with screws and/or brackets that engage corresponding seats formed on the platens of the press and on the bases of the mold;
b) a hydraulic/pneumatic system with actuators that move pins/keys that achieve a mechanical anchoring faster than the conventional mechanical system;
c) a magnetic system with magnetic plates secured by means of screws and/or brackets onto the platens of the press, the anchoring of the mold being achieved through the magnetic force of said plates.

Each of said known systems has some drawbacks, that often restrict their use to certain specific applications:
a) the mechanical system is slow and therefore typically used when there is no need to replace the mold often; moreover, the anchoring force is concentrated at the screws/brackets, usually arranged along the periphery of the mold, there is always the risk of a wrong mounting by the operator and there is no certainty as to the correct tightening of the screws;
b) the hydraulic/pneumatic system is faster but has poor flexibility, in that the anchoring devices are at fixed positions on the platens; moreover, the keys require a continuous maintenance since they often tend to jam. This implies long periods of machine stop for their correct maintenance and to remove the mold in case of jamming with the tool inserted.
c) the magnetic system is not applicable in the case of molds of non-magnetic material (e.g. aluminium), and also in the case of very deep molds with a small base surface that does not allow the magnetic plate to exert a sufficient force with respect to the mold weight; moreover, since the magnetic plates are secured onto the platens of the press by means of screws and/or brackets, the latter cause at positions far from the securing locations some deflections and separations between the press platen, the magnetic plate and the mold base that negatively affect the rigidity and uniformity of the magnetic coupling.

It should also be considered that the presses are generally manufactured only with the mechanical or hydraulic/pneumatic system, whereas the installation of the magnetic plates is a subsequent working that often requires to make additional holes that can invalidate the factory certification.

The magnetic system also has specific drawbacks in the case of molds for the injection molding of plastic materials, and is even substantially not applicable with molds for the pressure die casting of metals.

In the first case the use of the magnetic system is possible only because in the moving platen of the press there are provided just a few ejectors arranged at definite positions, whereby the relevant magnetic plate can be shaped with holes to allow the passage of said ejectors. However, a drawback of this system is that in the presence of thermal insulation plates arranged between the press and the mold base the magnetic anchoring becomes very difficult when not impossible.

In the second case the use of the magnetic system is practically impossible since in the moving platen of the press there are provided many ejectors, even more than 20, because the ejection positions are not standardized, although generally no more than 4 ejectors are then used for each mold. Moreover, the ejectors are concentrated in the central region of the moving platen, in order to be able to mount also small molds, whereby the relevant magnetic plate would not have a sufficient area to retain the mold.

It should be noted that also on the fixed platen there is a similar problem, in that also the position of the injection point is variable therefore there is provided a large central opening that excessively reduces the area of the magnetic plate.

A further problem stems from the fact that the presses are usually not provided with a cooling system, or at most provide it only on the fixed platen where the metal is injected, whereby the temperature increase during the molding may cause a decline in the magnetic properties of the mold anchoring plates.

Therefore the object of the present invention is to provide a mold having an anchoring system which overcomes said drawbacks. This object is achieved by means of a mold provided with a magnetic device for the anchoring on the press platens. Other advantageous features are disclosed in the dependent claims.

The main advantage of this mold is that it is a "universal" mold, meaning that it can be made in any material and can be used in any type of manufacturing process on any press.

In fact, by providing a magnetic anchoring device on the mold it is possible to secure said mold on any press for injection molding of plastic materials, pressure die casting of metals and die forging of sheets without any requirement of changes to be made to the press, and even when the mold is made in a non-magnetic material since the press platens are certainly made in a ferromagnetic material (steel or cast iron).

In particular, the advantages in rapidity, uniformity, flexibility, reliability and safety of the magnetic system can be achieved also in molds for the die casting of metals since the poles of the magnetic anchoring device are arranged on the mold so as to fully exploit the room available among the ejection holes.

In this way the mold can be designed so that the integrated anchoring device is capable of supporting the weight thereof even when the mold is deep and with a little base area. Moreover, in this latter case it is also possible, if desired, to combine the magnetic anchoring with a mechanical anchoring (e.g. a key) since the seats for the mechanical anchoring on the press platen are available, whereas when a magnetic plate is mounted on the press platen said seats are unavailable.

A further advantage of the present mold stems from the fact that the mold cooling circuit can be used also to control the temperature of the integrated anchoring device, so as to guarantee the strength of the magnetic anchoring even during the molding phase.

Still another advantage of such a mold is the possibility of arranging the magnetic poles on the outer surface of the mold base below a thermal insulation plate, so as to achieve a good magnetic anchoring even in molds with thermal insulation.

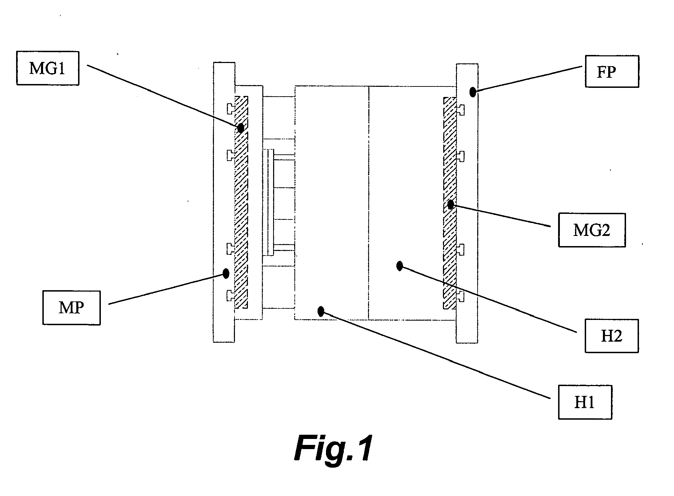

These and other advantages and characteristics of the mold according to the present invention will be clear to those skilled in the art from the following detailed description of an embodiment thereof with reference to the only drawing, annexed as fig.1, that shows a diagrammatic illustration of the mold secured on the platens of a press.

With reference to said figure, there is seen that a mold according to the present invention is made up of a first half H1, provided with a first magnetic field generator MG1, and a second half H2, provided with a second magnetic field generator MG2.

It should be noted that each mold half H1, H2 can actually be composed of several members, thus meaning as mold half the assembly of the parts secured on one of the press platens.

The magnetic field generators MG1, MG2 can be made with permanent magnets, electromagnets or electro-permanent magnets, and each one of them is arranged on the base of the relevant mold half H1, H2 to act respectively on the moving platen MP and on the fixed platen FP of the press.

Position sensors (not shown) check the correct positioning of the two mold halves H1, H2 on the platens MP, FP, while other optional control systems check that the generated magnetic force is sufficient and that the electric circuit that supplies the anchoring device is operating (for electromagnetic or electro-permanent generators).

Once all the sensors have confirmed the correct operation of the anchoring device, the press can be activated with the certainty that the mold is secured thereon in a uniform and safe manner.

It should be noted that the principle of magnetic anchoring can be extended also to the dies and/or internal parts of the mold itself and/or parts thereof, in order to allow a quick removal in case of wear, maintenance and/or change for a similar production. In such an instance, the mold will be provided with a plurality of magnetic anchoring devices, the above-mentioned main device for the anchoring on the press platens and other devices for securing the internal removable parts.

It is clear that the above-described and illustrated embodiment of the mold according to the invention is just an example susceptible of various modifications. In particular, the type, shape and size of the magnetic field generators MG1, MG2, as well as of possible other internal generators, can be freely changed according to the type of mold.

## Claims

1. A mold made up of a first half (H1) and a second half (H2) to be secured on respective platens (MP, FP) of a press, **characterized in that** it includes at least one magnetic anchoring device including a first magnetic field generator (MG1), arranged on the base of said first mold half (H1), and a second magnetic field generator (MG2), arranged on the base of said second mold half (H2), so as to act on said press platens (MP, FP).

2. A mold according to claim 1, **characterized in that** the magnetic field generators (MG1, MG2) are electromagnetic or electro-permanent generators, and the anchoring device further includes control systems suitable to check that the generated magnetic force is sufficient and that the electric circuit that supplies the anchoring device is operating.

3. A mold according to claim 1 or 2, **characterized in that** it includes further magnetic anchoring devices for securing internal removable parts of the mold.

## Amended claims

### Amended claims in accordance with Rule 86(2) EPC.

**1.** A mold made up of a first half (H1) and a second half (H2) to be secured on respective platens (MP, FP) of a press, including at least one magnetic anchoring device that includes a first magnetic field generator (MG1), arranged on the base of said first mold half (H1), and a second magnetic field generator (MG2), arranged on the base of said second mold half (H2), so as to act on said press platens (MP, FP)
, **characterized in that** said magnetic field generators (MG1, MG2) are electro-permanent generators, and the anchoring device further includes control systems suitable to check that the generated magnetic force is sufficient and that the electric circuit that supplies the anchoring device is operating.

**2.** A mold according to claim 1, **characterized in that** it includes further magnetic anchoring devices for securing internal removable parts of the mold.
